# DEMANDE DE BREVET EUROPEEN

(11) **EP 4 380 228 A1**
(43) Date de publication de la demande: **05.06.2024**
(21) Numéro de dépôt: 23213707.5
(22) Date de dépôt: 01.12.2023
(51) Int. Cl.: H04W 28/02, H04W 72/542, H04W 72/543

(54) **PROCÉDÉ ET DISPOSITIF DE COMMUNICATION DANS UN RÉSEAU DE COMMUNICATION SANS FIL**

(30) Priorité: 01.12.2022 FR 2212630
(71) Demandeur: Commissariat à l'énergie atomique et aux énergies alternatives, 75015 Paris (FR)
(72) Inventeur: DINH, Ngoc-Lam, 38054 Grenoble Cedex 9 (FR); MAMAN, Mickaël, 38054 Grenoble Cedex 9 (FR); CALVANESE STRINATI, Emilio, 38054 Grenoble Cedex 9 (FR)
(74) Mandataire: Lavoix

(57) **Abrégé**

Ce procédé de communication dans un réseau de communication sans fil, mis en oeuvre par un processeur d'un noeud de communication, comporte, pour une pluralité de paquets à transmettre à un noeud destinataire, pour une application prédéterminée : une réception d'informations (56, 58) relatives à une qualité de communication dans le réseau et d'informations relatives à un indicateur de performance applicatif, une détermination (62, 64, 66) d'une pluralité de fenêtres de transmission disjointes, et calcul, pour chaque fenêtre de transmission, d'un instant temporel central associé et d'une largeur de fenêtre associée, une classification (68) des fenêtres de transmission, dans des classes de qualité de service, en fonction d'une distribution statistique de la latence et de l'indicateur de performance applicatif, et une répartition (70) des paquets à transmettre dans au moins une des fenêtres de transmission, la répartition prenant en compte au moins une contrainte associée à ladite application prédéterminée.

## Description

La présente invention concerne un procédé de communication dans un réseau de communication sans fil.

L'invention concerne également un dispositif et un programme d'ordinateur associés.

L'invention se situe plus généralement dans le domaine des télécommunications sans fil, et plus particulièrement dans le domaine des systèmes de télécommunications de cinquième génération (5G).

Un des objectifs principaux des technologies de communication sans fil 5G est d'augmenter la capacité, la densité de communications des réseaux cellulaires, tout en améliorant la fiabilité et en réduisant la latence de communication de bout en bout, entre un équipement émetteur et un équipement destinataire, chacun des équipements étant muni d'interfaces de communication adéquates.

La communication ultra-fiable et à faible latence, connue sous l'acronyme URLLC (pour « Ultra-reliable and low-latency communication ») représente une catégorie de services couverts par les systèmes 5G, et présente de nombreuses applications dans des domaines dans lesquels la fiabilité et la latence sont critiques, par exemple l'automatisation industrielle, les applications de chirurgie à distance, la réalité augmentée, les systèmes de transport intelligents.

Les approches préalablement proposées pour atteindre les niveaux de performances requis pour réaliser une communication URLLC, et en particulier pour contrôler la latence, se divisent en deux catégories : les approches proactives et les approches réactives.

Les approches proactives réservent des ressources et sélectionnent des mécanismes de communication, à mettre en oeuvre par chaque noeud de communication d'un réseau de communication sans fil, de manière à assurer la qualité de service (e.g. la latence) requise, y compris dans les pires cas d'éventuelle dégradation des conditions de transmission, par exemple en présence d'un canal de transmission très bruité ou présentant des interférences. De telles approches induisent une sur-consommation de ressources et de mécanismes de communication, les pires cas envisagés pouvant se produire très rarement en pratique.

Les approches réactives proposent l'activation de ressources supplémentaires ou de mécanismes de communication supplémentaires (par exemple, le renvoi des paquets) de manière adaptative, en cas de dégradation des conditions de transmission, par exemple l'adaptation des paramètres de transmission en fonction d'une prédiction du canal de transmission. De telles approches peuvent induire une latence élevée, et nécessitent également des ressources calculatoires importantes pour le calcul de prédictions.

Les inventeurs ont proposé, dans la demande de brevet FR2103542, un procédé et un dispositif amélioré capable de conjointement réduire la latence et d'améliorer la fiabilité d'un réseau de communication sans fil tout en maintenant une efficacité appropriée.

Toutes les approches connues de contrôle de la latence, par exemple de minimisation de la gigue (i.e. la variation de la latence au fil du temps), mettent en oeuvre des optimisations dépendantes du canal de communication.

Les inventeurs ont mis au point une approche différente, qui permet de mieux contrôler et réduire les ressources calculatoires nécessaires, tout en satisfaisant une cible de qualité prédéterminée.

A cet effet, l'invention propose, selon un aspect, un procédé de communication dans un réseau de communication sans fil comportant une pluralité de noeuds de communication, mis en oeuvre par un processeur d'un noeud de communication, comportant une réception d'une pluralité de paquets à transmettre à un noeud destinataire, pour une application prédéterminée. Ce procédé comporte des étapes de :
- réception d'informations relatives à une qualité de communication dans le réseau de communication sans fil, comprenant des données de latence de transmission, et réception d'informations relatives à un indicateur de performance applicatif,
- détermination d'une pluralité de fenêtres de transmission disjointes, et calcul, pour chaque fenêtre de transmission, d'un instant temporel central associé et d'une largeur de fenêtre associée,
- classification des fenêtres de transmission, dans des classes de qualité de service, en fonction d'une distribution statistique de la latence et de l'indicateur de performance applicatif,
- répartition des paquets à transmettre pour réaliser un envoi de chaque paquet dans au moins une des fenêtres de transmission, la répartition prenant en compte au moins une contrainte associée à ladite application prédéterminée.

Avantageusement, dans le procédé proposé, la répartition des paquets à transmettre dans chacune des fenêtres de communication déterminées prend en compte au moins une contrainte associée à l'application. Ainsi, le contrôle de la latence est avantageusement adapté à l'application envisagée. Différemment des approches de l'état de la technique, l'optimisation n'est plus uniquement basée sur l'état du réseau ou du canal de communication, dans la mesure où certaines latences sont acceptables par l'application envisagée.

Avantageusement, la latence de la communication n'est plus dépendante des aléas de l'environnement de communication mais est directement adaptée à l'entité qui utilisera cette donnée (par exemple l'application ou le système de contrôle)

Le procédé de communication selon l'invention peut également présenter une ou plusieurs des caractéristiques ci-dessous, prises indépendamment ou selon toutes les combinaisons techniquement envisageables.

Le procédé comporte en outre une mise en oeuvre d'au moins un mécanisme de réduction de la gigue pour chaque fenêtre de transmission.

Le procédé comporte en outre un envoi des paquets à transmettre en mettant en oeuvre les mécanismes déterminés, selon la répartition des paquets par fenêtre de transmission, et une réception d'informations de retour relatives à un indicateur de performance applicatif.

L'indicateur de performance applicatif est un coût de perte de paquets.

Le procédé comprend en outre une réception d'une première valeur cible d'indicateur de qualité de service d'un ou plusieurs noeuds du réseau de communication et une détermination d'une stratégie initiale d'orchestration de mécanismes pour chaque noeud du réseau de communication sans fil, permettant d'atteindre la première valeur cible d'indicateur de qualité de service.

La première valeur cible d'indicateur de qualité de service est une valeur maximale et/ou minimale de latence de bout-en-bout dans le réseau de communication sans fil et/ou une valeur de gigue et/ou une valeur de fiabilité.

La classification des fenêtres de transmission est effectuée en au moins trois classes de qualité de service, comprenant une classe de service facile, une classe de service standard et une classe de service difficile.

Les fenêtres de transmission sont disjointes, au moins deux fenêtres de transmission successives étant séparées par une période de non transmission.

Selon un autre aspect, l'invention un dispositif de communication formant un noeud de communication dans un réseau de communication sans fil comportant une pluralité de nœuds de communication, comportant un processeur configuré pour, suite à une réception d'une pluralité de paquets à transmettre à un noeud destinataire, pour une application prédéterminée, implémenter :
- un module de réception d'informations relatives à une qualité de communication dans le réseau de communication sans fil, comprenant des données de latence de transmission, et de réception d'informations relatives à un indicateur de performance applicatif,
- un module de détermination d'une pluralité de fenêtres de transmission disjointes, et calcul, pour chaque fenêtre de transmission, d'un instant temporel central associé et d'une largeur de fenêtre associée,
- un module de classification des fenêtres de transmission, dans des classes de qualité de service, en fonction d'une distribution statistique de la latence et de l'indicateur de performance applicatif,
- un module de répartition des paquets à transmettre pour réaliser un envoi de chaque paquet dans au moins une des fenêtres de transmission, la répartition prenant en compte au moins une contrainte associée à ladite application prédéterminée.

Avantageusement, le dispositif de communication est configuré pour mettre en oeuvre un procédé de communication tel que brièvement décrit ci-dessus, selon tous les modes de réalisation envisagés.

Selon un autre aspect, l'invention concerne un programme d'ordinateur comportant des instructions logicielles qui, lorsqu'elles sont exécutées par un dispositif électronique programmable, mettent en oeuvre un procédé de communication tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 est un schéma bloc d'un réseau de communication sans fil comprenant un dispositif de communication selon un mode de réalisation de l'invention ;
[Fig 2] la figure 2 est un exemple de fenêtres de transmission selon un mode de réalisation ;
[Fig 3] la figure 3 est un synoptique des principales étapes d'un procédé de communication selon un mode de réalisation ;
[Fig 4] la figure 4 est un exemple de fenêtres de transmission dans un scénario de mise en oeuvre du mécanisme de retransmission automatique des paquets.

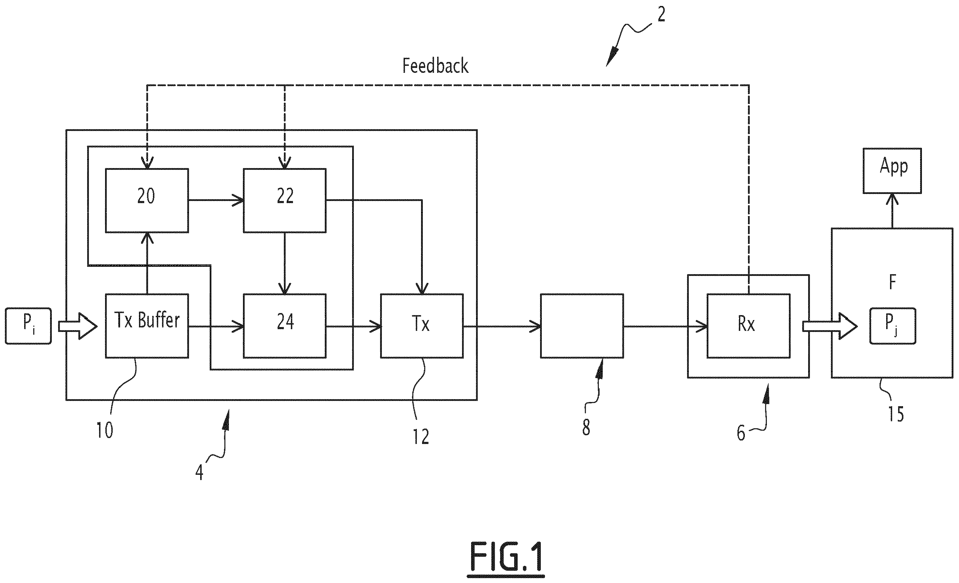

La figure 1 illustre schématiquement un réseau de communication sans fil 2, comportant une pluralité de noeuds de communication 4, 6 et un canal de communication radio 8.

Un noeud de communication est un dispositif de communication (ou équipement de communication), muni d'un émetteur et d'un récepteur et configuré pour opérer dans un réseau de communication sans fil, selon un protocole de communication sans fil choisi.

Par exemple le dispositif de communication sans fil est muni d'une ou plusieurs antennes d'émission/réception.

Le canal de communication 8 comporte en pratique une pluralité de noeuds de communication sans fil interconnectés, et configurés pour communiquer en émission et en réception. Le canal de communication est variable au cours du temps suivant le scénario d'utilisation mais également suivant la paire de noeuds. Ce canal dynamique impacte les performances du système de communication (fiabilité, latence).

Selon un mode de réalisation optionnel, le réseau de communication sans fil 2 est un réseau à sauts multiples entre noeuds de communication, la communication entre un noeud source et un noeud destination se faisant au travers de plusieurs noeuds relais.

En variante, tout autre type de réseau de communication sans fil est envisageable.

Les noeuds de communication du réseau peuvent être tout type de dispositifs munis d'interfaces de communication sans fil, par exemple une station relais, une station de base, un dispositif utilisateur.

Selon une variante ou en complément, le réseau de communication 2 est un réseau de capteurs configurés pour capter des grandeurs physiques, ou un réseau de transport comportant des véhicules embarquant des interfaces de communication et des dispositifs de signalisation routière également muni d'interfaces de communication.

Bien entendu, ces exemples ne sont pas exhaustifs, tout type de réseau de communication sans fil étant susceptible de mettre en oeuvre un procédé tel que décrit ci-après.

Le dispositif de communication (ou noeud) 4 du réseau de communication 2 est un dispositif électronique programmable configuré pour implémenter un procédé de communication tel que décrit ci-après.

Selon des modes de réalisation, ce procédé de communication est mis en oeuvre de façon centralisée ou distribuée.

Ce dispositif électronique programmable 4 comporte une unité de mémoire électronique 10, une interface de communication 12, et un processeur 14

Le processeur 14 est configuré pour exécuter des modules 20, 22, 24 pour mettre en oeuvre le procédé de de communication dans un réseau de communication sans fil selon l'invention.

Des paquets à transmettre, Pᵢ, chaque paquet ayant une estampille temporelle (en anglais « timestamp » associée), sont reçus et mémorisés dans l'unité de mémoire électronique 10, par exemple dans une structure de mémoire tampon ou « buffer » en anglais.

Le module 20 est un module de réception de paquets à transmettre et d'estimation de conditions de communication, et notamment d'estimation d'une distribution statistique de latence dans le réseau de communication. En outre, le module de réception 20 est configuré pour recevoir également des informations relatives à un indicateur de performance applicatif, en provenance d'un noeud destinataire ou d'un système de contrôle associé à un noeud destinataire. Par exemple, dans l'exemple illustré dans la figure 1, le noeud destinataire est le dispositif 6, qui met en oeuvre une application choisie.

Le module 22 est un module de contrôle configuré pour mettre en oeuvre une détermination d'une pluralité de fenêtres de transmission et un calcul pour chaque fenêtre de transmission d'un instant temporel associé et d'une largeur de fenêtre associée, et une classification des fenêtres de transmission dans des classes de qualité de service en fonction de la distribution statistique de la latence et de l'indicateur de performance applicatif, par exemple reçu du noeud destinataire.

Le module 24 est un module de répartition des paquets à transmettre dans l'une au moins des fenêtres de transmission déterminées, en prenant en compte au moins une contrainte associée à une application App prédéterminée, mise en oeuvre par le noeud destinataire 6, ou par un système 15 connecté au noeud destinataire.

Par exemple, le système 15 est un robot ou un récepteur, connecté au noeud destinataire 6.

De préférence, le module 24 prend en compte des informations transmises par le noeud destinataire, en provenance de l'application App, et ainsi répartir les paquets en fonction de leur utilisation par l'application App, par exemple dans l'ordre adéquat pour l'application App.

Par exemple, dans une application de capture d'images numériques par le dispositif de communication 4 et de traitement des images, par exemple pour une classification mettant en oeuvre un algorithme d'intelligence artificielle, par le noeud destinataire 6, l'état des ressources calculatoires disponibles dans le dispositif 6 pour le traitement d'images peut être pris en compte pour la répartition des paquets de données d'images, pour éviter de surcharger la mémoire tampon du dispositif 6 lorsque les ressources calculatoires ne sont pas disponibles.

En d'autres termes, les communications sont planifiées en fonction des contraintes du canal et des besoins de l'application utilisatrice ou du système utilisateur.

Le dispositif de communication 4 est configuré pour recevoir un retour d'informations ou « feedback » en anglais, au moins du noeud destinataire 6, qui est destiné à recevoir les paquets Pⱼ et à les fournir à l'application App donnée, ainsi que des noeuds intermédiaires du réseau de communication.

Le retour d'informations comporte notamment des informations relatives à la latence de transmission, en particulier la latence de bout-en-bout.

La latence de bout-en-bout comprend par exemple un ou plusieurs paramètres parmi les délais de propagation, de traitement et de mise en file d'attente des paquets et des données associées, pour la transmission entre un noeud source et un noeud destination du réseau de communication sans fil.

Dans un mode de réalisation, les modules 20, 22, 24 sont réalisés chacun sous forme d'un logiciel de communication.

Ce logiciel est apte à être enregistré, sous forme de programme d'ordinateur comportant des instructions logicielles qui implémentent un procédé de communication tel que décrit ci-après. Les instructions logicielles sont aptes à être enregistrées sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

En variante non représentée, les modules 20, 22, 24 sont réalisés chacun sous forme d'un composant logique programmable, tel qu'un FPGA (de l'anglais *Field Programmable Gate Array*), un GPU (processeur graphique) ou un GPGPU (de l'anglais *General-purpose processing on graphies processing*), ou encore sous forme d'un circuit intégré dédié, tel qu'un ASIC (de l'anglais *Application Spécifie Integrated Circuit*)*.*

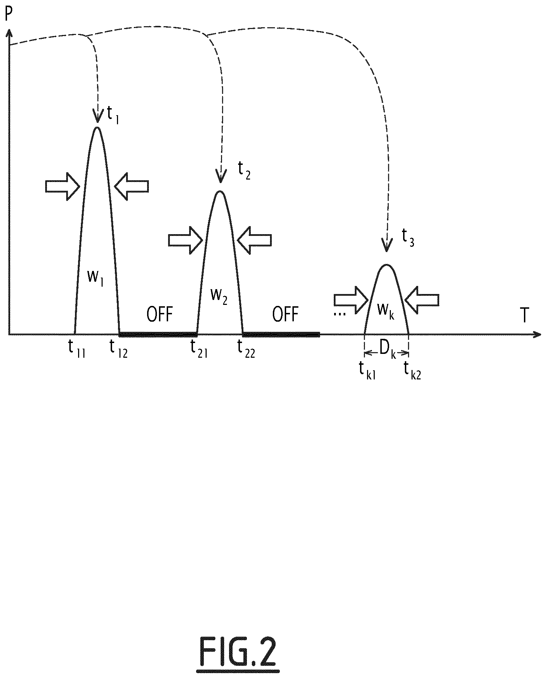

La figure 2 illustre un graphe représentant la densité de probabilité de réception des paquets (en ordonnées, axe référencé « P ») en fonction du temps (en abscisses, axe référencé « T ») pour un nombre K de fenêtres de transmission calculées, K étant un nombre entier supérieur à 1.

Dans l'exemple de la figure 2, trois fenêtres de transmission, notées respectivement w₁, w₂ et wₖ sont illustrées.

Chaque fenêtre wᵢ est définie par un instant temporel central tᵢ (respectivement t₁, t₂ et tₖ dans l'exemple) et par une largeur de fenêtre Dᵢ, définie par l'écart temporel entre un instant de fin de fenêtre de transmission tᵢ₂ et un instant de début de fenêtre de transmission ti1 : Dᵢ=tᵢ₂-tᵢ₁.

Dans l'exemple illustré, les paquets transmis durant la première fenêtre w₁ auront une latence inférieure aux paquets transmis durant la deuxième fenêtre w₂ et ainsi de suite.

Entre deux fenêtres de transmission, la transmission n'est pas activée, ce qui est représenté par une plage de non transmission « OFF ». Ainsi, avantageusement, le procédé de communication proposé réalise une économie de ressources.

Selon des modes de réalisation, les ressources comprennent une ressource matérielle de mémorisation, de calcul ou de transmission, et/ou une ressource virtuelle telle qu'une machine virtuelle, et/ou une ressource temporelle ou fréquentielle. En effet, le spectre de communication étant découpé en cellules temps/fréquence, il est possible de gérer l'attribution des cellules temps/fréquence aux destinataires par allocation temporelle, ou par allocation fréquentielle ou par un découpage du spectre temps/fréquence.

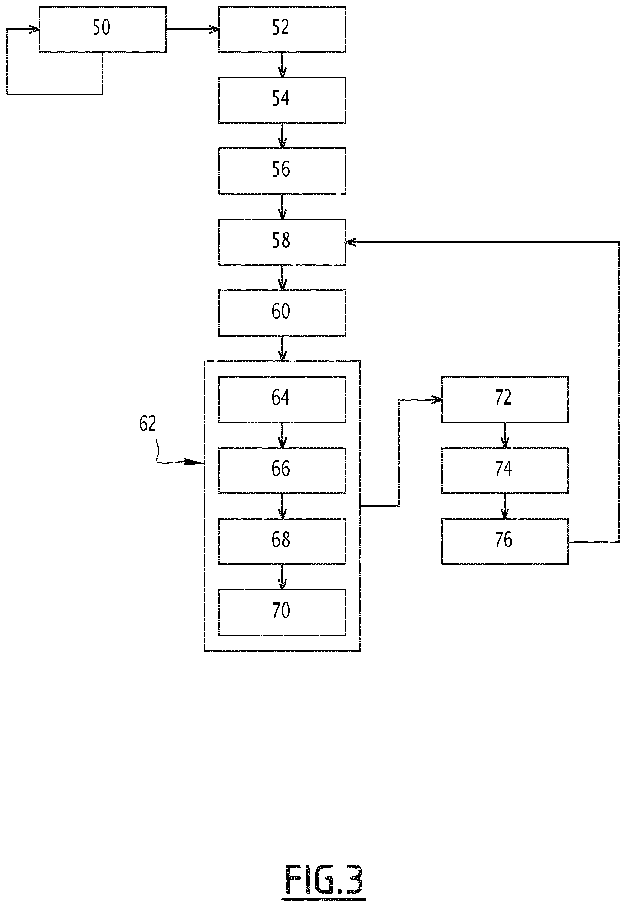

La figure 3 est un synoptique des principales étapes d'un procédé de communication mis en oeuvre par un dispositif électronique programmable tel que décrit à la figure 1.

Le procédé est exécuté durant un délai d'exécution prédéterminé, puis son exécution est répétée. Le procédé comporte une réception et mémorisation de paquets à transmettre (étape 50) à un noeud destinataire pour une application prédéterminée, qui s'exécute en parallèle des autres étapes décrites ci-après. Les paquets à transmettre sont par exemple des paquets formatés selon le protocole de communication choisi. L'arrivée des paquets est ordonnée dans le temps, chaque paquet ayant une estampille temporelle (ou « timestamp ») associée.

Il est à noter que le procédé décrit peut être utilisé pour une ou plusieurs applications. Pour une application donnée, un traitement des paquets dans l'ordre d'arrivée est envisagé.

Pour une pluralité d'applications, il est possible d'affecter une priorité à u flux ou un temps de vie à chaque paquet (ou TTL pour « Time-to-Live).

Le procédé comporte en outre une étape 52 de réception d'une première valeur cible d'indicateur de qualité de service attendue, obtenue d'un ou plusieurs noeuds du réseau de communication sans fil. La valeur cible d'indicateur de qualité de service est par exemple une valeur maximale de latence de bout-en-bout et/ou une valeur minimale de latence de bout-en-bout, et/ou une valeur de gigue (« jitter » en anglais), et/ou une valeur de fiabilité (taux de succès de la réception du paquet).

A l'étape 54, une stratégie initiale d'orchestration de mécanismes pour chaque noeud du réseau de communication sans fil, permettant d'atteindre la première valeur cible d'indicateur de qualité de service, est mise au point et appliquée. Cette étape 54 peut être mise en oeuvre par tout procédé connu à cet effet, par exemple le procédé décrit dans la demande de brevet FR2103542.

Selon des modes de réalisation, un mécanisme est choisi parmi : des mécanismes de déploiement et de contrôle du réseau de communication sans fil, des mécanismes d'adaptation de la couche physique du réseau de communication et de ses configurations, des mécanismes d'agilité en fréquence, des mécanismes liés à l'accès et à la planification des ressources, des mécanismes de contrôle et de surveillance des ressources de communication, des mécanismes de routage et de gestion des connectivités, des mécanismes de redondance (e.g. la procédure de retransmission automatique HARQ), des mécanismes de sélection de trajets multiples, des mécanismes de gestion des ressources (par exemple, ajout de ressources comme l'ajout d'un relais, d'antennes de communication ou d'unités de calcul).

La sélection d'un ou plusieurs mécanismes est effectuée en fonction de la première valeur cible d'indicateur de qualité de service, en tenant compte de la durée d'exécution.

Une stratégie d'orchestration de mécanismes désigne la sélection d'un ensemble de mécanismes, les mécanismes étant exécutés par des noeuds du réseau, pour atteindre un niveau de qualité, i.e. une valeur cible d'indicateur de qualité.

Suite à l'application de l'étape 54 de mise en oeuvre des mécanismes de la stratégie initiale d'orchestration, le procédé met en oeuvre une étape 56 d'évaluation de la performance du réseau de communication. Par exemple une distribution statistique de la latence est estimée. Par exemple, la distribution statistique de la latence de bout en bout est calculée.

Ensuite, des informations relatives à une qualité de communication dans le réseau de communication sans fil, comprenant des données de latence de transmission, sont reçues à l'étape de réception de statistiques 58. Par exemple, des informations relatives à la latence sont reçues de tous les noeuds du réseau de communication.

De plus, à l'étape 58 sont reçues des informations relatives à un indicateur de performance applicatif. Dans des modes de réalisation, l'indicateur de performance applicatif est un coût de perte de paquets. Ainsi, lors de l'itération ultérieure des étapes, les performances seront améliorées pour une adaptation à l'application, i.e. par exemple permettant de privilégier la transmission de paquets qui minimise le coût de perte.

Le procédé comprend ensuite une étape 60 de détermination d'une deuxième valeur cible d'indicateur de qualité de service attendue, dépendante de l'application, et des informations reçues à l'étape 58.

Le procédé comporte ensuite une détermination d'une pluralité de fenêtres de transmission 62, comportant une étape 64 d'obtention d'un nombre K de fenêtres de transmission, K étant un entier supérieur à 1, une étape 66 de calcul pour chaque fenêtre de transmission, d'un instant temporel central associé et d'une largeur de fenêtre associée, et une étape 68 de classification des fenêtres de transmission, dans des classes de qualité de service, en fonction d'une distribution statistique de la latence et de l'indicateur de performance applicatif.

Selon un mode de réalisation, le nombre K de fenêtres obtenu à l'étape 64 est un nombre prédéterminé, par exemple K=3.

Selon une variante, le nombre K de fenêtres est calculé en fonction de la distribution statistique de la latence de bout-en-bout calculée précédemment.

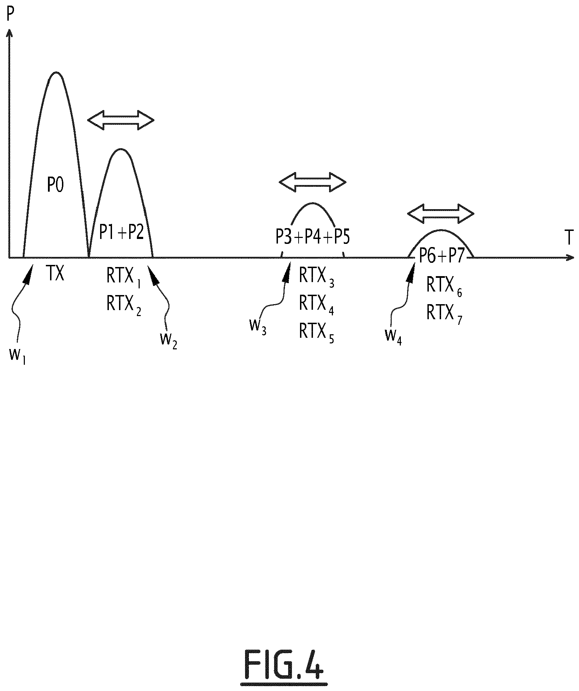

Un exemple de calcul de fenêtres sera explicité ci-après en référence à la figure 4.

Les fenêtres de transmission sont classifiées en une pluralité de classes de qualité de service à l'étape 68, en fonction de la distribution statistique de la latence de bout-en-bout calculée précédemment et de l'indicateur de performance applicatif.

Par exemple, dans un mode de réalisation, la classification consiste à associer un niveau de facilité de service, s'échelonnant entre « facile » (en anglais « easy-to-serve »), « moyen » (en anglais « standard-to-serve ») et « difficile » (en anglais « difficult-to-serve »).

Un sous-ensemble de paquets à transmettre est réparti (étape 70) vers l'une ou plusieurs des fenêtres de transmission, en prenant compte au moins une contrainte associée à l'application. Ainsi, la latence des paquets est contrôlée de manière déterministe, l'instant d'envoi de certains paquets pouvant être avancé ou retardé selon les besoins applicatifs.

De plus, un poids est calculé et associé à chaque fenêtre de transmission, par exemple par intégration de la distribution de la latence pour chaque fenêtre.

De préférence, les fenêtres de transmission ainsi calculées sont disjointes.

Dans un mode de réalisation, au moins pour une partie des fenêtres de transmission, deux fenêtres de transmission successives sont séparées par une plage d'arrêt de la transmission (par exemple, les plages « OFF » de la figure 2).

Le procédé comporte ensuite, selon des modes de réalisation, une étape 72 de contrôle de la variation de la latence, qui met en oeuvre une stratégie d'orchestration de mécanismes, afin de réduire la gigue pour chaque fenêtre de transmission.

Par exemple, à l'étape 72 est mise en oeuvre une minimisation de la somme des variations de la latence sₖ des fenêtres de transmission.

A l'étape 74 la stratégie d'orchestration de mécanismes de réduction de la gigue est mise en oeuvre, et les paquets sont transmis au noeud destinataire via le réseau de communication sans fil, chaque noeud mettant en oeuvre les mécanismes déterminés.

Suite à la transmission, une réception d'informations de retour (étape 76) a lieu, lors de laquelle des informations relatives à un indicateur de performance applicatif sont reçues. Dans des modes de réalisation, l'indicateur de performance applicatif est un coût de perte de paquets. L'étape 76 est suivie alors de l'étape 58 de réception d'informations retour (« feedback ») préalablement décrite.

La figure 4 illustre des fenêtres de transmission dans un scénario de mise en oeuvre du mécanisme de retransmission automatique des paquets, connu sous le nom de HARQ (de l'anglais « Hybrid Automatic Repeat reQuest »).

Dans une mise en oeuvre classique, la retransmission est effectuée de manière réactive, suite à la réception d'un non-acquittement (NAQ) du récepteur. Une telle stratégie induit une forte latence, due à l'attente d'acquittement ou non-acquittement, mais permet de réaliser une économie de ressources mises en oeuvre. Pour assurer une latence prédéterminée, une retransmission proactive est nécessaire, mais cela induit une potentielle surconsommation des ressources de transmission. Avec le procédé proposé, et comme montré à la figure 4, la RTXᵢ retransmission de paquets (notée RTXᵢ pour la ième retransmission) est avancée ou retardée de manière contrôlée. Cela permet de diminuer la jigue tout en assurant une latence selon les besoins applicatifs.

Plus en détail, à la figure 4 sont illustrées quatre fenêtres de transmission dans un graphe représentant la densité de probabilité (référence « P »), axe des abscisses) en fonction du temps (référence « T », axe des ordonnées), de manière analogue à la représentation de la figure 2, le nombre de fenêtres déterminées par le procédé étant K=4 dans cet exemple, alors qu'un nombre de fenêtres égal à 8 est prévu en utilisant la distribution statistique de la latence (méthode classique).

En plus des fenêtres de transmission sont représentées les transmission ou retransmissions de paquets. Ainsi, la première fenêtre w₁ correspond à la transmission initiale, la deuxième fenêtre w₂ à deux retransmissions en parallèle, RTX₁ et RTX₂, la troisième fenêtre w₃ à trois retransmissions en parallèle, RTX₃, RTX₄ et RTX₅, la quatrième fenêtre w₄ à deux retransmissions en parallèle, RTX₆ et RTX₇.

La manière de paralléliser les transmissions, et les choix des retransmissions dépendent de l'indicateur de performance applicatif, et donc permettent une adaptation à l'application.

Le procédé décrit est en outre adaptable à la mise en oeuvre d'une pluralité d'applications distinctes.

Avantageusement, l'invention permet un contrôle quasi-déterministe de la latence, et une réduction de la variation de la latence.

Avantageusement, la mise en oeuvre de mécanismes pour la minimisation de la variation de la latence par fenêtre de transmission est facilitée, car les fenêtres de transmission sont classifiées dans des classes de qualité de service, et il est plus facile d'optimiser la transmission pour une même classe de qualité de service.

Avantageusement, le procédé proposé permet d'économiser des ressources, notamment durant les plages de non-transmission.

## Revendications

1. Procédé de communication dans un réseau de communication sans fil comportant une pluralité de noeuds de communication, mis en oeuvre par un processeur d'un noeud de communication (4), comportant une réception d'une pluralité de paquets à transmettre à un noeud destinataire, pour une application prédéterminée, et étant **caractérisé en ce qu'**il comporte des étapes de :
- réception d'informations (56, 58) relatives à une qualité de communication dans le réseau de communication sans fil, comprenant des données de latence de transmission, et réception d'informations relatives à un indicateur de performance applicatif,
- détermination (62, 64, 66) d'une pluralité de fenêtres de transmission disjointes, et calcul, pour chaque fenêtre de transmission, d'un instant temporel central associé et d'une largeur de fenêtre associée,
- classification (68) des fenêtres de transmission, dans des classes de qualité de service, en fonction d'une distribution statistique de la latence et de l'indicateur de performance applicatif,
- répartition (70) des paquets à transmettre pour réaliser un envoi de chaque paquet dans au moins une des fenêtres de transmission, la répartition prenant en compte au moins une contrainte associée à ladite application prédéterminée.

2. Procédé selon la revendication 1, comportant en outre une mise en oeuvre (72, 74) d'au moins un mécanisme de réduction de la gigue pour chaque fenêtre de transmission.

3. Procédé selon la revendication 2, comportant en outre un (74) envoi des paquets à transmettre en mettant en oeuvre les mécanismes déterminés, selon la répartition des paquets par fenêtre de transmission, et une réception (76) d'informations de retour relatives à un indicateur de performance applicatif.

4. Procédé selon l'une des revendications 1 à 3, dans lequel l'indicateur de performance applicatif est un coût de perte de paquets.

5. Procédé selon l'une quelconque des revendications 1 à 4, comprenant en outre, une réception (52) d'une première valeur cible d'indicateur de qualité de service d'un ou plusieurs noeuds du réseau de communication et une détermination (54) d'une stratégie initiale d'orchestration de mécanismes pour chaque noeud du réseau de communication sans fil, permettant d'atteindre la première valeur cible d'indicateur de qualité de service.

6. Procédé selon la revendication 5, dans lequel la première valeur cible d'indicateur de qualité de service est une valeur maximale et/ou minimale de latence de bout-en-bout dans le réseau de communication sans fil et/ou une valeur de gigue et/ou une valeur de fiabilité.

7. Procédé selon l'une quelconque des revendications 1 à 6, dans lequel la classification (68) des fenêtres de transmission est effectuée en au moins trois classes de qualité de service, comprenant une classe de service facile, une classe de service standard et une classe de service difficile.

8. Procédé selon l'une quelconque des revendications 1 à 7, dans lequel lesdites fenêtres de transmission sont disjointes, au moins deux fenêtres de transmission successives étant séparées par une période de non transmission.

9. Dispositif de communication formant un noeud de communication (4) dans un réseau de communication sans fil comportant une pluralité de noeuds de communication, comportant un processeur configuré pour, suite à une réception d'une pluralité de paquets à transmettre à un noeud destinataire, pour une application prédéterminée, implémenter :
- un module (20) de réception d'informations relatives à une qualité de communication dans le réseau de communication sans fil, comprenant des données de latence de transmission, et de réception d'informations relatives à un indicateur de performance applicatif,
- un module (22) de détermination d'une pluralité de fenêtres de transmission disjointes, et calcul, pour chaque fenêtre de transmission, d'un instant temporel central associé et d'une largeur de fenêtre associée,
- un module (22) de classification des fenêtres de transmission, dans des classes de qualité de service, en fonction d'une distribution statistique de la latence et de l'indicateur de performance applicatif,
- un module (24) de répartition des paquets à transmettre pour réaliser un envoi de chaque paquet dans au moins une des fenêtres de transmission, la répartition prenant en compte au moins une contrainte associée à ladite application prédéterminée.

10. Programme d'ordinateur comportant des instructions logicielles qui, lorsqu'elles sont exécutées par un dispositif électronique programmable, mettent en oeuvre un procédé de communication dans un réseau de communication sans fil conforme aux revendications 1 à 8.
